# EUROPÄISCHE PATENTSCHRIFT

(11) **EP 3 436 704 B1**
(45) Veröffentlichungstag und Bekanntmachung des Hinweises auf die Patenterteilung: **02.03.2022**
(21) Anmeldenummer: 16714388.2
(22) Anmeldetag: 01.04.2016
(51) Int. Cl.: F04D 13/06, F04D 29/42, F04D 29/60, F04D 29/66

(54) **KÜHLMITTELPUMPENANORDNUNG**
COOLANT PUMP ASSEMBLY
ENSEMBLE POMPE À LIQUIDE DE REFROIDISSEMENT

(43) Veröffentlichungstag der Anmeldung: 06.02.2019
(73) Patentinhaber: Pierburg Pump Technology GmbH, 41460 Neuss (DE)
(72) Erfinder: WIENECKE, Thomas, 47877 Willich (DE); WEIRICH, Elias Immanuel, 40667 Meerbusch (DE); SCHRECKENBERG, Stephan, 50259 Pulheim-Stommeln (DE)
(74) Vertreter: terpatent Patentanwälte ter Smitten Eberlein-Van Hoof Rütten Daubert
(86) Internationale Anmeldenummer: PCT/EP2016/057181
(87) Internationale Veröffentlichungsnummer: WO 2017/167393

(56) Entgegenhaltungen:
- WO-A1-2013/156515
- JP-A- 2001 304 200
- JP-U- H02 141 797
- US-A1- 2002 015 647

## Beschreibung

Die Erfindung betrifft eine Kühlmlttelpumpenanordnung mit einer elektrischen Kühlmittelpumpe für ein Kraftfahrzeug und einer Motorkomponente und/oder einem Karosserieteil, wobei die Kühlmittelpumpe ein mehrteiliges Pumpengehäuse mit einem Kühlmitteleinlass und einem Kühlmittelauslass aufweist, wobei in dem Pumpengehäuse eine elektrische Antriebseinheit angeordnet ist und wobei das Pumpengehäuse eine Befestigungsanordnung aufweist, über die die Kühlmittelpumpe im Motorraum mit der Motorkomponente und/oder dem Karosserieteil lösbar verbindbar ist.

Derartige elektrische Kühlmittelpumpen sind aus dem Stand der Technik bekannt und dienen insbesondere in Kombination mit einem Thermomanagement zur bedarfsgerechten Motorkühlung.

Die Kühlmittelpumpe wird üblicherweise im Motorraum angeordnet und über mehrere Schraubverbindungen an einer Motorkomponente oder einer Karosserie befestigt. Eine derartige Kühlmittelpumpenanordnung ist beispielsweise in der WO 2012/084278 A1 offenbart. Die Kühlmittelpumpe weist ein zweiteiliges Gehäuse auf, wobei in einem ersten Gehäuseteil ein Kühlmitteleinlass sowie ein Kühlmittelauslass ausgebildet sind und in einem zweiten Gehäuseteil eine Antriebseinheit zusammen mit der Elektronik angeordnet sind. Das zweite Gehäuseteil umfasst an seiner Außenfläche eine Befestigungsanordnung, bestehend aus einem ersten sich radial erstreckenden Abschnitt und einem zweiten sich radial erstreckenden Abschnitt. Dabei weisen der erste und der zweite sich radial erstreckende Abschnitt an den jeweiligen freien Enden Durchgangsbohrungen auf, durch die zur Befestigung der Kühlmittelpumpe an einer Motorkomponente oder einer Karosserie Schrauben mit jeweils einem Dämpfer durchgesteckt werden, welche In die Motorkomponente oder Karosserie geschraubt werden.

Außerdem sind in der US 2002/0015647 A1, der JP-A-2001304200 und der JP-U-402141797 Kühlmittelpumpenanordnungen offenbart, bei welcher eine Kühlmittelpumpe über eine Befestigungsanordnung an einer Komponente befestigt ist, wobei die Befestigungsvorrichtung eine Formschlussverbindung und eine Schraubenverbindung aufweist.

Es ist bekannt, dass im Motorraum außer dem Verbrennungsmotor viele Nebenaggregate angeordnet sind sowie crashrelevante Abstände einzuhalten sind und somit wenig Platz für das Montieren der Nebenaggregate und für das dazu benötigte Werkzeug vorhanden ist. Daher ist es bei der beschriebenen Kühlmittelpumpenanordnung nachteilig, dass mehrere Montageschritte an unterschiedlichen Stellen benötigt werden, um die Kühlmittelpumpe an einer Motorkomponente oder der Karosserie zu befestigen.

Der Erfindung liegt daher die Aufgabe zugrunde, eine Kühlmittelpumpenanordnung bereitzustellen, die die Befestigung der Kühlmittelpumpe erleichtert.

Diese Aufgabe wird durch eine Kühlmittelpumpenanordnung mit den Merkmalen des Hauptanspruchs gelöst. Dadurch, dass die Befestigungsanordnung mindestens eine Schraubenverbindung und mindestens eine Formschlussverbindung aufweist, wobei die mindestens eine Formschlussverbindung und die Schraubverbindung eine gemeinsame Fügerichtung aufweisen, wird eine Kühlmittelpumpenanordnung geschaffen, die die Befestigung der Kühlmittelpumpe an einer Motorkomponente oder der Karosserie im Motorraum erleichtert, indem eine verminderte Anzahl an Schraubenverbindungen verwendet werden und dadurch der zum Einschrauben der Schrauben erforderliche Platz im Motorraum nicht benötigt wird. Durch die Kombination aus Formschluss- und Schraubenverbindung werden außerdem weniger Montageschritte zur Befestigung der Kühlmittelpumpe benötigt, da die Formschlussverbindung nahezu alle möglichen Bewegungen der Kühlmittelpumpe sperrt und die Schraubenverbindung lediglich als Absicherung der Formschlussverbindung bzw. zum Sperren der restlichen Bewegungsrichtungen dient.

In einer bevorzugten Ausgestaltung ist die mindestens eine Formschlussverbindung durch einen Stift ausgeführt, wobei der Stift in eine in der Motorkomponente oder im Karosserieteil ausgebildeten Bohrung eingreift. Alternativ ist die mindestens eine Formschlussverbindung durch eine Rippe ausgeführt, wobei die Rippe in eine in der Motorkomponente oder im Karosserieteil ausgebildete Aussparung eingreift. Dabei wird der Stift oder die Rippe durch eine einfache translatorische Verschiebung der Kühlmittelpumpe in die Bohrung eingesetzt und durch die Schraubenverbindung gesichert. Außerdem wird für die Herstellung des Stifts oder der Rippe kein zusätzlicher Herstellungsschritt benötigt, da dieser zusammen mit dem Gehäuse in einem Herstellungsschritt gefertigt wird.

Vorzugsweise weist die mindestens eine Schraubenverbindung und die mindestens eine Formschlussverbindung jeweils einen Dämpfer auf, wodurch Vibrationen zwischen der Kühlmittelpumpe und einer Motorkomponente oder Karosserie absorbiert und die dadurch entstehenden Geräusche reduziert werden.

In einer bevorzugten Ausgestaltung ist der Dämpfer aus einem elastischen Kunststoff hergestellt, wodurch die Vibrationen besonders gut absorbiert werden können.

Vorzugsweise ist der Dämpfer als eine Hülse mit einem Kragenabschnitt ausgeführt, wobei der Kragenabschnitt an einem Ende der Hülse ausgebildet ist. Dadurch werden alle sich berührenden Flächen zwischen der Kühlmittelpumpe und einer Motorkomponente oder der Karosserie durch den Dämpfer voneinander getrennt und die Übertragung von Vibrationen reduziert.

In einer vorteilhaften Ausgestaltung sind die mindestens eine Schraubenverbindung und die mindestens eine Formschlussverbindung in einer gemeinsamen Ebene angeordnet. Alternativ sind die mindestens eine Schraubenverbindung und die mindestens eine Formschlussverbindung in unterschiedlichen Ebenen angeordnet.

Vorzugsweise weist die Befestigungsanordnung eine Schraubenverbindung und zwei Formschlussverbindungen auf. Dabei verhindern die Formschlussverbindungen die rotatorischen Bewegungen und die Schraubenverbindung die translatorischen Bewegungen der Kühlmittelpumpe, so dass die Kühlmittelpumpe fest an einer Motorkomponente oder Karosserie angeordnet ist. Durch eine derartige Kühlmittelpumpenanordnung muss bei der Befestigung der Kühlmittelpumpe im Motorraum lediglich eine Schraube durch den Werker eingeschraubt werden. Außerdem wird die Zeit zur Befestigung der Kühlmittelpumpe an einer Motorkomponente oder der Karosserie verringert.

Vorzugsweise ist die Kühlmittelpumpe eine Spaltrohrpumpe, wodurch eine elektrische Kühlmittelpumpe kompakt ausgeführt wird.

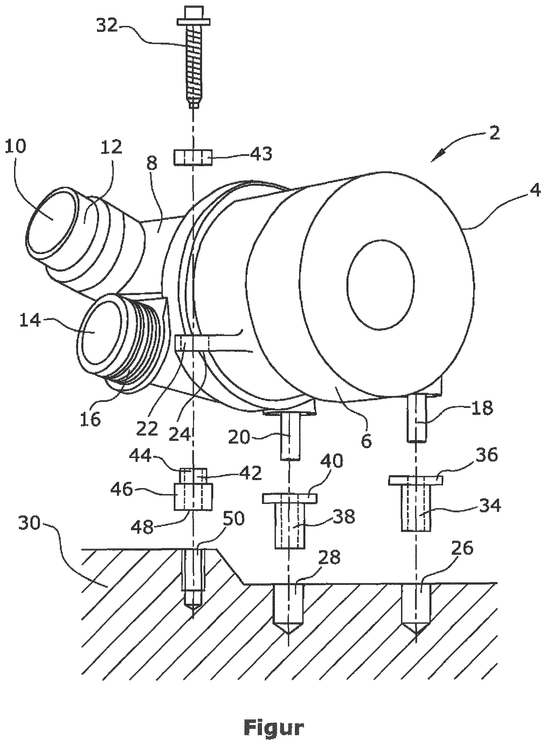

Z Die Figur zeigt eine erfindungsgemäße Ausführung einer Kühlmittelpumpenanordnung in Explosionsdarstellung. In der Figur ist eine Kühlmittelpumpe 2 für ein Kraftfahrzeug dargestellt.

Die Kühlmittelpumpe 2 dient der Versorgung eines Kfz-Verbrennungsmotors mit einem Kühlmittel. Die Kühlmittelpumpe 2 weist ein im Wesentlichen zweiteiliges Pumpengehäuse 4 auf, das sich aus einem zylindrischen, ersten Gehäuseteil 6 und einem an einem Längsende des ersten Gehäuseteils 6 montierten zweiten Gehäuseteil 8 zusammensetzt.

Im ersten Gehäuseteil 6 ist eine nicht weiter dargestellte elektrische Antriebseinheit inklusive der Motorelektronik angeordnet, wobei ein Spaltrohr den Innenraum des Pumpengehäuses 4 in einen nassen und einen trockenen Bereich unterteilt. Dabei sind der Stator der Antriebseinheit und die Motorelektronik im trockenen Bereich und der Rotor der Antriebseinheit sowie der Pumpenrotor im nassen Bereich angeordnet.

Das zweite Gehäuseelement 8, welches eine Pumpenkammer zusammen mit dem ersten Gehäuseelement 6 begrenzt, weist einen Kühlmitteleinlass 10 mit einem Einlassstutzen 12 und einen Kühlmittelauslass 14 mit einem Auslassstutzen 16 auf.

Im Betrieb fließt das Kühlmittel durch den Kühlmitteleinlass 10 in die Pumpenkammer, wird durch den Pumpenrotor in Rotation versetzt und strömt durch den Kühlmittelauslass 14 heraus.

Die Kühlmittelpumpe 2 ist erfindungsgemäß über zwei Formschlussverbindung 18, 26; 20, 28 und eine Schraubenverbindung 32, 50 an einer Motorkomponente 30, im vorliegenden Ausführungsbeispiel eine Ölwanne 30, oder einer Karosserie befestigt. Hierfür umfasst das erste Gehäuseteil 6 einen ersten Stift 18, der in eine erste, in der Ölwanne 30 ausgebildete Bohrung 26 eingreift, einen zweiten Stift 20, der in eine zweite, in der Ölwanne 30 ausgebildete Bohrung 28 eingreift, und einen Vorsprung 22 mit einer Durchgangsbohrung 24, durch die eine Schraube 32 durchgreift, welche in eine in der Ölwanne 30 ausgebildete Bohrung 50 mit einem Innengewinde eingeschraubt wird.

Radial zwischen der Mantelfläche des ersten Stifts 18 und der Mantelfläche der ersten Bohrung 26 ist ein erster Dämpfer 34 angeordnet, welcher als Hülse ausgeführt Ist und an seinem der Kühlmittelpumpe 2 zugewandten Ende einen Kragenabschnitt 36 aufweist. Dabei liegt im montierten Zustand eine kreisringförmige Grundfläche des Kragenabschnitts 36 am ersten Gehäuseteil 6 und die gegenüber gelegene kreisringförmige Grundfläche des Kragenabschnitts 36 an der Ölwanne 30 an. In gleicher Weise ist zwischen dem zweite Stift 20 und der Ölwanne 30 ein zweiter Dämpfer 38 angeordnet, der ebenfalls als Hülse ausgeführt ist und einen Kragenabschnitt 40 aufweist.

Zwischen dem Vorsprung 22 und der Ölwanne 30 ist ein dritter Dämpfer 42 angeordnet, der eine Durchgangsöffnung 48 aufweist, durch die die Schraube 32 durchgesteckt ist. Der dritte Dämpfer 42 weist einen ersten Abschnitt 44 auf, der in die Durchgangsbohrung 24 eingreift und einen zweiten Abschnitt 46, der einen größeren Durchmesser als die Durchgangsbohrung 24 aufweist und somit mit dem Absatz am Vorsprung 22 und mit dem entgegengesetzten Ende an der Ölwanne 30 anliegt. Außerdem ist zwischen dem Vorsprung 22 und der Auflagefläche des Schraubenkopfs der Schraube 32 ein ringförmiges Dämpfungselement 43 angeordnet.

Beim Montieren der Kühlmittelpumpe 2 an beispielsweise der Ölwanne 30 werden zunächst die Dämpfer 34, 38, 42 an den jeweiligen Stellen der Kühlmittelpumpe 2 montiert. Im nächsten Schritt werden die Stifte 18, 20 gemeinsam mit den Dämpfern 34, 38 in die jeweiligen Bohrungen 26, 28 eingesetzt, wodurch der Formschluss gebildet wird. Im letzten Montageschritt wird die Schraube 32 durch den dritten Dämpfer 42 gesteckt und in die Bohrung 50 eingeschraubt.

So zeichnet sich die erfindungsgemäße Kühlmittelpumpenanordnung durch eine einfache Befestigung der Kühlmittelpumpe 2 an einer Motorkomponente 30 oder der Karosserie aus.

Es sollte deutlich sein, dass auch andere konstruktive Ausführungsformen der Kühlmittelpumpenanordnung im Vergleich zur beschriebenen Ausführungsform möglich sind, ohne den Schutzbereich des Hauptanspruchs zu verlassen. So können beispielsweise die Formschlussverbindung 18, 26; 20, 28, die Schraubenverbindung 32, 50 oder die Dämpfer 34, 38, 42 anders ausgeführt sein.

## Patentansprüche

1. Kühlmittelpumpenanordnung mit einer elektrischen Kühlmittelpumpe (2) für ein Kraftfahrzeug und einer Motorkomponente (30) und/oder einem Karosserieteil, wobei die Kühlmittelpumpe (2) ein mehrteiliges Pumpengehäuse (4) mit einem Kühlmitteleinlass (10) und einem Kühlmittelauslass (14) aufweist, wobei in dem Pumpengehäuse (4) eine elektrische Antriebseinheit angeordnet Ist und wobei das Pumpengehäuse (4) eine Befestigungsanordnung (18, 20, 26, 28, 32, 50) aufweist, über die die Kühlmittelpumpe (2) im Motorraum mit der Motorkomponente (30) und/oder dem Karosserieteil lösbar verbindbar ist, wobei die Befestigungsanordnung mindestens eine Schraubenverbindung (32, 50) und mindestens eine Formschlussverbindung (18, 26; 20, 28) aufweist, **dadurch gekennzeichnet, dass** die mindestens eine Formschlussverbindung (18, 26, 20, 28) und die mindestens eine Schraubenverbindung (32, 50) eine gemeinsame Fügerichtung aufweisen.

2. Kühlmittelpumpenanordnung nach Anspruch 1, **dadurch gekennzeichnet, dass** die mindestens eine Formschlussverbindung (18, 26; 20, 28) durch einen Stift (18; 20) ausgeführt ist, wobei der Stift (18; 20) in eine in der Motorkomponente oder im Karosserieteil ausgebildete Bohrung (26; 28) eingreift.

3. Kühlmittelpumpenanordnung nach Anspruch 1, **dadurch gekennzeichnet, dass** die mindestens eine Formschlussverbindung (18, 26; 20, 28) durch eine Rippe ausgeführt ist, wobei die Rippe in eine in der Motorkomponente (30) oder im Karosserieteil ausgebildete Aussparung eingreift.

4. Kühlmittelpumpenanordnung nach einem der vorangegangenen Ansprüche, **dadurch gekennzeichnet, dass** die mindestens eine Schraubenverbindung (32, 50) und die mindestens eine Formschlussverbindung (18, 26; 20, 28) jeweils einen Dämpfer (34, 38, 42) aufweisen.

5. Kühlmittelpumpenanordnung nach Anspruch 4, **dadurch gekennzeichnet, dass** der Dämpfer (34, 38, 42) aus einem elastischen Kunststoff hergestellt ist.

6. Kühlmittelpumpenanordnung nach Anspruch 4 oder 5, **dadurch gekennzeichnet, dass** der Dämpfer (34; 38) als eine Hülse mit einem Kragenabschnitt (36; 40) ausgeführt ist, wobei der Kragenabschnitt (36; 40) an einem Ende der Hülse ausgebildet ist.

7. Kühlmittelpumpenanordnung nach einem der vorangegangenen Ansprüche, **dadurch gekennzeichnet, dass** die mindestens eine Schraubenverbindung und die mindestens eine Formschlussverbindung in einer gemeinsamen Ebene angeordnet sind.

8. Kühlmittelpumpenanordnung nach einem der Ansprüche 1 bis 6, **dadurch gekennzeichnet, dass** die mindestens eine Schraubenverbindung und die mindestens eine Formschlussverbindung in unterschiedlichen Ebenen angeordnet sind.

9. Kühlmittelpumpenanordnung nach einem der vorangegangenen Ansprüche, **dadurch gekennzeichnet, dass** die Befestigungsanordnung eine Schraubenverbindung (32, 50) und zwei Formschlussverbindungen (18, 26; 20, 28) aufweist.

10. Kühlmittelpumpenanordnung nach einem der vorangegangenen Ansprüche, **dadurch gekennzeichnet, dass** die Kühlmittelpumpe (2) eine Spaltrohrpumpe ist.

## Claims

1. A coolant pump assembly having an electric coolant pump (2) for a motor vehicle and an engine component (30) and/or a body part, comprising a multi-part pump housing (4) having a coolant inlet (10) and a coolant outlet (14), wherein in said pump housing (4) an electric drive unit is arranged and wherein said pump housing (4) comprises a fastening assembly (18, 20, 26, 28, 32, 50) via which said coolant pump (2) is adapted to be detachably connected in the engine compartment to the engine component (30) and/or the body part, wherein said fastening assembly comprises at least one screw connection (32, 50) and at least one interlocking connection (18, 26; 20, 28), **characterized in that** the at least one interlocking connection (18, 26, 20, 28) and the at least one screw connection (32, 50) comprising a common joining direction.

2. The coolant pump assembly according to claim 1, **characterized in that** the at least one interlocking connection (18, 26; 20, 28) is realized by a pin (18; 20), wherein said pin (18; 20) engages with a bore (26; 28) in the engine component or in the body part.

3. The coolant pump assembly according to claim 1, **characterized in that** the at least one interlocking connection (18, 26; 20, 28) is realized by a rib, wherein said rib engages with a recess in the engine component (30) or in the body part.

4. The coolant pump assembly according to any one of the preceding claims, **characterized in that** the at least one screw connection (32, 50) and the at least one interlocking connection (18, 26; 20, 28) each comprise a damper (34, 38, 42).

5. The coolant pump assembly according to claim 4, **characterized in that** the damper (34, 38, 42) is made from an elastic plastic material.

6. The coolant pump assembly according to claim 4 or 5, **characterized in that** the damper (34; 38) is configured as a sleeve having a collar portion (36; 40), wherein said collar portion (36; 40) is formed at one end of the sleeve.

7. The coolant pump assembly according to any one of the preceding claims, **characterized in that** the at least one screw connection and the at least one interlocking connection are arranged in a common plane.

8. The coolant pump assembly according to any one of claims 1 to 6, **characterized in that** the at least one screw connection and the at least one interlocking connection are arranged in different planes.

9. The coolant pump assembly according to any one of the preceding claims, **characterized in that** the fastening arrangement comprises a screw connection (32, 50) and two interlocking connections (18, 26; 20, 28).

10. The coolant pump assembly according to any one of the preceding claims, **characterized in that** the coolant pump (2) is a can pump.

## Revendications

1. Un ensemble de pompe de refroidissement avec une pompe de refroidissement électrique (2) pour un véhicule automobile et un composant de moteur (30) et/ou une partie de carrosserie, comprenant un boîtier de pompe (4) en plusieurs parties avec une entrée de réfrigérant (10) et une sortie de réfrigérant (14), dans lequel une unité d'entraînement électrique est disposée dans le boîtier de pompe (4) et dans lequel le boîtier de pompe (4) comprend un ensemble de fixation (18, 20, 26, 28, 32, 50) par lequel ladite pompe de refroidissement (2) est adaptée pour être reliée de manière détachable dans le compartiment moteur au composant de moteur (30) et/ou à la partie de carrosserie, dans lequel ledit ensemble de fixation comprend au moins une connexion à vis (32, 50) et au moins une connexion à verrouillage (18, 26; 20, 28), **caractérisé en ce que** l'au moins une connexion à verrouillage (18, 26, 20, 28) et l'au moins un connecteur à vis (32, 50) comprennent une direction d'assemblage commune.

2. L'ensemble de pompe de refroidissement selon la revendication 1, **caractérisé en ce que** la au moins une connexion à verrouillage (18, 26; 20, 28) est réalisée par une goupille (18; 20), dans lequel ladite goupille (18; 20) s'engage avec un alésage (26; 28) dans le composant de moteur (30) ou dans la partie de corps.

3. L'ensemble de pompe de refroidissement selon la revendication 1, **caractérisé en ce que** la au moins une connexion à verrouillage (18, 26; 20, 28) est réalisée par une nervure, dans laquelle ladite nervure s'engage avec un évidement dans le composant du moteur (30) ou dans la partie du corps.

4. L'ensemble de pompe de refroidissement selon l'une quelconque des révendications précédentes, **caractérisé en ce que** le au moins un connecteur à vis (32, 50) et le au moins un connecteur à verrouillage (18, 26; 20, 28) comprennent chacun un amortisseur (34, 38, 42).

5. L'ensemble de pompe de refroidissement selon la revendication 4, **caractérisé en ce que** l'amortisseur (34, 38, 42) est fabriqué à partir d'un matériau plastique élastique.

6. L'ensemble de pompe de refroidissement selon la revendication 4 ou 5, **caractérisé en ce que** l'amortisseur (34; 38) est configuré comme un manchon ayant une partie de collier (36; 40), dans lequel ladite partie de collier (36; 40) est formée à une extrémité du manchon.

7. L'ensemble de pompe de refroidissement selon l'une quelconque des revendications précédentes, **caractérisé en ce que** l'au moins un connecteur à vis et l'au moins un connexion à verrouillage sont disposés dans un plan commun.

8. L'ensemble de pompe de refroidissement selon l'une quelconque des revendications 1 à 6, **caractérisé en ce que** l'au moins un connecteur à vis et l'au moins un connexion à verrouillage sont disposés dans des plans différents.

9. L'ensemble de pompe de refroidissement selon l'une quelconque des revendications précédentes, **caractérisé en ce que** le système de fixation comprend une connecteur à vis (32, 50) et deux connexions à verrouillage (18, 26; 20, 28).

10. L'ensemble de pompe de refroidissement selon l'une quelconque des revendications précédentes, **caractérisé en ce que** la pompe de refroidissement (2) est une pompe à pot.
